# EUROPEAN PATENT APPLICATION

(11) **EP 4 607 162 A1**
(43) Date of publication of application: **27.08.2025**
(21) Application number: 25151083.0
(22) Date of filing: 10.01.2025
(51) Int. Cl.: G01J 3/02, G01J 3/50

(54) **OPTICAL CHARACTERISTIC MEASURING APPARATUS**

(30) Priority: 19.01.2024 JP 2024006801
(71) Applicant: KONICA MINOLTA, INC., Tokyo 100-7015 (JP)
(72) Inventor: TANAKA, Hiroki, Tokyo, 100-7015 (JP); YAMAMOTO, Yuzuru, Tokyo, 100-7015 (JP); TAKAHASHI, Makoto, Tokyo, 100-7015 (JP)
(74) Representative: Gille Hrabal Partnerschaftsgesellschaft mbB Patentanwälte

(57) **Abstract**

An optical characteristic measuring apparatus (1) includes a display (15), an operation member (14) that is used by a user for both an operation of start of measurement and an operation of activation of preview mode in which an image of a measurement target region is displayed on the display (15), and control means (103) that selectively executes the start of measurement and the activation of the preview mode based on a way of operation of the operation member (14), and when the preview mode is activated, maintains the preview mode even after the user releases the operation of the operation member (14) until the measurement starts or the preview mode ends.

## Description

### Background of the Invention

### 1. Technical Field

The present invention relates to an optical characteristic measuring apparatus such as a colorimeter.

### 2. Description of Related art

As an optical characteristic measuring apparatus such as a colorimeter, an apparatus provided with preview mode for displaying an image of a measurement target region on the display, allowing a user to perform positioning of the measurement target region or the like before the measurement, has conventionally been known (for example, US 6583879 B1).

In addition, in the optical characteristic measuring apparatus provided with such preview mode, an apparatus has also been known in which when the operation button is brought into the half-pressed state, the preview mode is activated and a preview image is displayed on the display, and further, when the operation button is fully pressed all the way down, the measurement is started.

However, the conventional optical characteristic measuring apparatus that distinguishes between the activation of the preview mode and the start of measurement by half-pressing/fully pressing the operation button has the following issue.

That is, the preview mode is not maintained unless the user keeps the operation button in the half-pressed state, and the preview mode ends when the pressing of the operation button is released. Thus, there is the issue that the operability is poor and the usability is not good.

### Summary of the Invention

An object of the present invention is to provide an optical characteristic measuring apparatus having preview mode, which is improved in operability and usability.

The above-described object is achieved by the following means.
(1) An optical characteristic measuring apparatus including:
   a display,
   an operation member that is used by a user for both an operation of start of measurement and an operation of activation of preview mode in which an image of a measurement target region is displayed on the display; and
   control means that selectively executes the start of measurement and the activation of the preview mode based on a way of operation of the operation member, and when the preview mode is activated, maintains the preview mode even after the user releases the operation of the operation member until the measurement starts or the preview mode ends.
(2) The optical characteristic measuring apparatus according to the aforementioned item 1, in which the operation member is provided in or near a grip region to be gripped by the user.
(3) The optical characteristic measuring apparatus according to the aforementioned item 1 or 2, including
   a timer that counts operation duration of the operation member, in which
   the control means selectively executes the start of measurement and the activation of the preview mode according to a length of the operation duration counted by the timer.
(4) The optical characteristic measuring apparatus according to the aforementioned item 3, in which the control means activates the preview mode when the operation duration exceeds a first set time.
(5) The optical characteristic measuring apparatus according to the aforementioned item 3, in which the control means activates the preview mode when the operation is released after the operation duration exceeds a first set time.
(6) The optical characteristic measuring apparatus according to the aforementioned item 1 or 2, in which
   the operation member is a push button, and
   the control means selectively executes the start of measurement and the activation of the preview mode according to an amount of pressing of the push button.
(7) The optical characteristic measuring apparatus according to the aforementioned item 1 or 2, in which when the operation member is re-operated in a state where the preview mode is maintained after the operation of the operation member is released, the control means ends the preview mode and starts measurement when operation duration during re-operation is not more than a second set time, and ends the preview mode and returns the screen of the display to a screen before a preview when the operation duration during re-operation exceeds the second set time.
(8) The optical characteristic measuring apparatus according to the aforementioned item 4 or 5, in which the first set time is settable by the user.
(9) The optical characteristic measuring apparatus according to the aforementioned item 7, in which the second set time is settable by the user.

The optical characteristic measuring apparatus according to the present invention includes the operation member. The operation member is used by the user for both an operation of the start of measurement and an operation of the activation of the preview mode in which an image of the measurement target region is displayed on the display. The start of measurement and the activation of the preview mode are selectively executed based on the way of operation of the operation member.

Then, when the preview mode is activated, the preview mode is maintained even after the user releases the operation of the operation member until the measurement starts or the preview mode ends.

Thus, the preview mode is maintained for a predetermined time period even after the user releases the operation of the operation member. Accordingly, the user does not need to continuously maintain the activation operation state of the operation member to maintain the preview mode. Thus, the optical characteristic measuring apparatus that is improved in the operability and the usability is achieved.

### Brief Description of the Drawings

Fig. 1 is a perspective view of an optical characteristic measuring apparatus according to an embodiment of the present invention;
Fig. 2 is a perspective view of the optical characteristic measuring apparatus viewed from another angle;
Fig. 3A is a front view of an object to be measured, and Fig. 3B is a diagram illustrating a state where the object to be measured is displayed on a display of the optical characteristic measuring apparatus in preview mode;
Fig. 4 is a block diagram illustrating an electrical configuration for the optical characteristic measuring apparatus to selectively execute the start of measurement and the activation of the preview mode based on the way of operation of an operation member;
Fig. 5 is a flowchart for explaining a method of using the optical characteristic measuring apparatus;
Fig. 6 is a flowchart illustrating an operation example of the optical characteristic measuring apparatus that selectively executes the start of measurement and the activation of the preview mode based on the way of operation of the operation member;
Fig. 7 is a diagram illustrating screen transitions to be displayed on the display of the optical characteristic measuring apparatus in the operation example illustrated in Fig. 6;
Fig. 8 is a flowchart illustrating another operation example of the optical characteristic measuring apparatus that selectively executes the start of measurement and the activation of the preview mode based on the way of operation of the operation member;
Fig. 9 is a flowchart illustrating still another operation example of the optical characteristic measuring apparatus that selectively executes the start of measurement and the activation of the preview mode according to the way of operating the operation member; and
Fig. 10 is a diagram illustrating a setting screen for a user to set a first set time and/or a second set time.

### Detailed Description

Hereinafter, an embodiment of the present invention will be described with reference to the drawings.

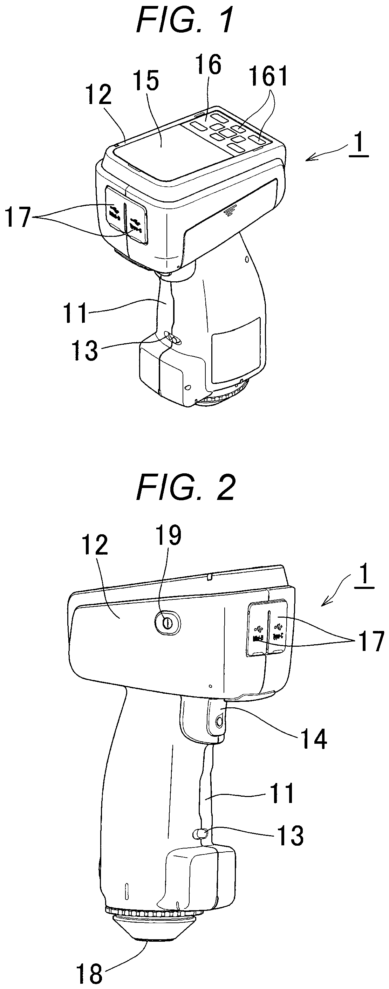

Fig. 1 and Fig. 2 are perspective views of an optical characteristic measuring apparatus (hereinafter, also simply referred to as a measuring apparatus) 1 according to an embodiment of the present invention.

The measuring apparatus 1 includes a body portion 11 that is vertically long and a head portion 12 that is box-shaped and formed integrally with the body portion 11 at an upper end portion of the body portion 11. The body portion 11 functions as a grip region to be gripped with a user's palm during the measurement. Hence, the body portion 11 is formed to have its cross section that is circular or near-circular and the upper side thereof is made smaller in diameter than the lower side, making it easier for the user to grip it.

A measurement diameter switching switch 13 is provided at the lower portion of the front surface of the body portion 11, and an operation button (corresponding to an operation member) 14 is provided at the upper portion of the front surface of the body portion 11. The operation button 14 is operated by the user at the time of the activation of the preview mode or at the time of the start of measurement. In this embodiment, the operation button 14 is implemented by a push button. The push button is capable of being pressed and returning automatically via a spring after the pressing is released. In addition, since the operation button 14 is provided at the upper portion of the front surface of the body portion 11 which is the grip region when gripping the measuring apparatus 1, the user can operate the operation button 14 with the hand gripping the apparatus. That is, the user can grip the measuring apparatus 1 and operate the operation button 14 with a single hand.

Electronic circuit components and the like are housed in the head portion 12. In addition, a display 15 formed of a liquid crystal panel or the like and an operation key section 16 are provided on the upper surface of the head portion 12. The operation key section 16 includes a plurality of operation keys 161 for operating the display 15. In addition, a communication cable connection section 17 is formed on the front surface of the head portion 12. In addition, a power button 19 is provided on a side surface of the head portion 12.

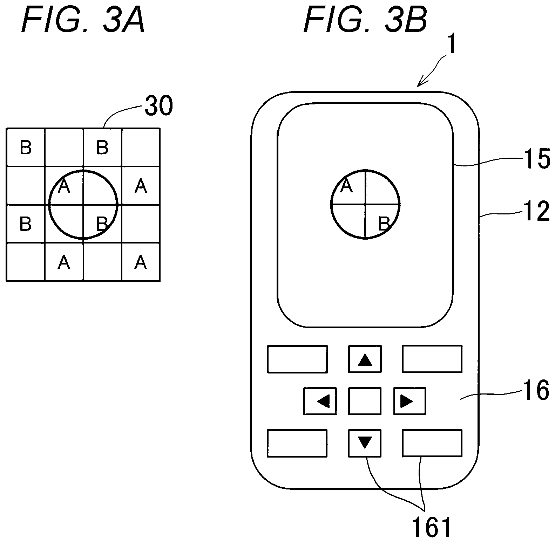

A measurement opening 18 that opens downward is formed at the bottom end of the body portion 11. In a state of letting the measurement opening 18 face an object to be measured, the apparatus 1 measures the irradiation light or the reflected light from the object to be measured. In addition, when the preview mode is activated, as illustrated in Fig. 3, the measurement target region of an object to be measured 30 facing the measurement opening 18 is displayed as a preview on the display 15. Via the preview display, it is possible to perform position confirmation of the object to be measured 30 and the like. Fig. 3 illustrates a state where the site within the black circle of the object to be measured 30 is displayed on the display 15 of the measuring apparatus 1.

In this embodiment, the start of measurement and the activation of the preview mode are selectively executed based on the way of operation of the operation button 14.

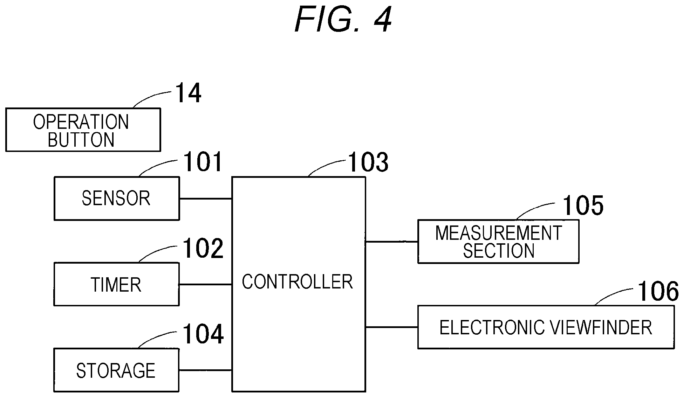

Fig. 4 is a block diagram illustrating an electrical configuration of the measuring apparatus 1. The measuring apparatus 1 executes the selective execution operation corresponding to the way of operation of the operation button 14.

The measuring apparatus includes a sensor 101, a timer 102, a controller 103, a storage 104, a measurement section 105, an electronic viewfinder 106, and the like.

The sensor 101 can detect, by detecting the amount of pressing of the operation button 14, the start of pressing, half-pressing in which the operation button 14 is half-pressed, full-pressing in which the operation button 14 is fully pressed all the way down, and the like. For the sensor 101, a known sensor used in a shutter mechanism of a camera or the like, such as an optical sensor, a magnetic sensor, or a mechanical sensor, may be used.

The timer 102 counts, under the control of the controller 103, the duration of pressing of the operation button 14 and the like.

The controller 103, which includes a processor such as a CPU, integrally controls the entire measuring apparatus 1. The controller 103 controls, specifically in this embodiment, the start of activation and stop of the preview mode, the start of measurement, and the like based on a signal from the sensor 101 or the timer 102. This point will be described below.

The storage 104 stores one or a plurality of predetermined set times. The set time serves as a reference when the controller 103 performs control such as the start of activation and stop of the preview mode. The storage 104 further stores a program for operating the controller 103, measurement data of the object to be measured 30, and other various kinds of data.

The measurement section 105 is a processing section of measuring the object to be measured 30, and includes a light source, a light receiving element, a processing circuit, and the like. Note that a part of the measurement section 105 is implemented by a function of the controller 103.

When the preview mode is activated, the electronic viewfinder 106 displays, on the display 15, the measurement target region of the object to be measured 30 facing the measurement opening 18. A part of the electronic viewfinder 106 is also implemented by a function of the controller 103.

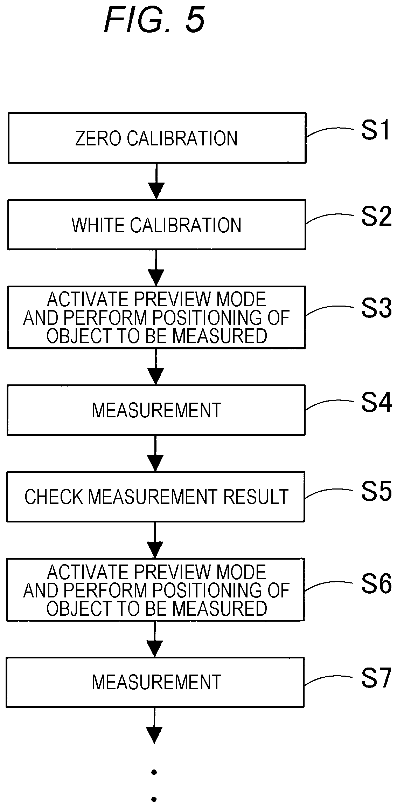

Next, a method of using the measuring apparatus 1 will be described with reference to the flowchart of Fig. 5.

In a state where the power is turned on, first, zero calibration is performed in step S1, and white calibration is performed in step S2. Next, in step S3, the preview mode is activated, the electronic viewfinder 106 operates, and the positioning of the object to be measured 30 is performed. Then, in step S4, measurement by the measurement section 105 is performed. In step S5, the user checks the measurement result displayed on the display 15. Thereafter, the positioning of the object to be measured through the activation of the preview mode in step S6, the measurement in step S7, and the checking of the measurement result are repeated.

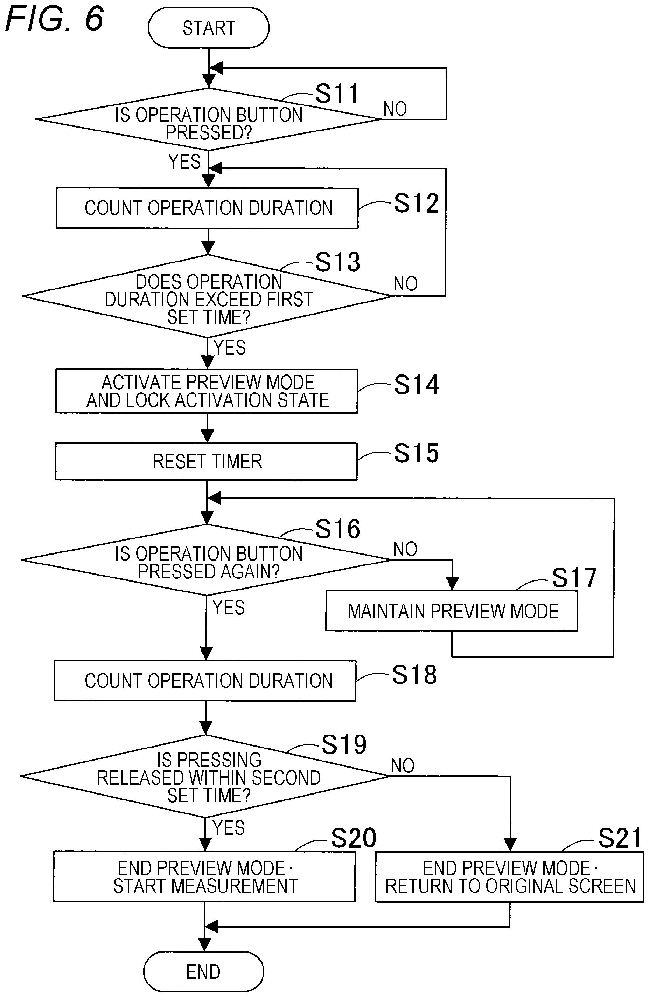

Next, an operation example of the measuring apparatus 1 that selectively executes the start of measurement and the activation of the preview mode based on the way of operation of the operation button 14 will be described with reference to the flowchart of Fig. 6. The operation is executed by the controller 103 of the measuring apparatus 1 operating according to an operation program stored in the storage 104 or the like.

In the example of Fig. 6, the start of measurement and the activation of the preview mode are selectively executed according to the time period during which the operation button 14 is pressed, that is, the operation duration.

In step S11, the controller 103 determines, based on a detection signal from the sensor 101, whether the operation button 14 has been pressed. In a case of no pressing (NO in step S11), the controller 103 keeps the processing in step S11 and waits until the operation button 14 is pressed.

When the operation button 14 is pressed (YES in step S11), the controller 103 causes the timer 102 to start counting the operation duration in step S12.

In step S13, the controller 103 determines whether the operation duration exceeds a first set time (for example, 0.5 seconds) stored in the storage 104. In a case where the operation duration does not exceed the first set time (NO in step S13), the processing returns to step S12, and the timer 102 continues to count the operation duration. When the operation duration exceeds the first set time (YES in step S13), the controller 103 activates the preview mode, operates the electronic viewfinder 106 and locks the activation state in step S14. In step S15, the controller 103 resets the timer 102.

When the preview mode is activated and the electronic viewfinder 106 operates, a part of a surface of the object to be measured 30 is displayed on the display 15. The user can check the position of the object to be measured 30 by viewing the display.

Next, in step S16, the controller 103 determines whether the operation button 14 has been pressed again after the pressing is released, that is, whether the operation button 14 has been re-operated. In a case of no re-operation (NO in step S16), in step S17, the controller 103 maintains the preview mode, brings the electronic viewfinder 106 into the active state, and waits for another pressing operation.

In step S16, when the operation button 14 is pressed again after the pressing is released (YES in step S16), the controller 103 causes the timer 102 to count the operation duration again in step S18.

Next, in step S19, the controller 103 determines whether the user has released the pressing operation of the operation button 14 within a second set time (for example, 0.5 seconds) stored in the storage 104. In other words, the controller 103 determines whether the short-pressing operation of the operation button 14 has been performed. When the short-pressing operation has been performed (YES in step S19), in step S20, the controller 103 ends the preview mode and starts measurement by the measurement section 105.

in a case where in step S19, the user does not release the pressing operation of the operation button 14 within the second set time, that is, in a case where the user long-presses the operation button 14 (NO in step S19), in step S21, the controller 103 ends the preview mode. The controller 103 returns the screen of the display 15 to the original screen before the preview mode is activated, for example, the measurement result display screen.

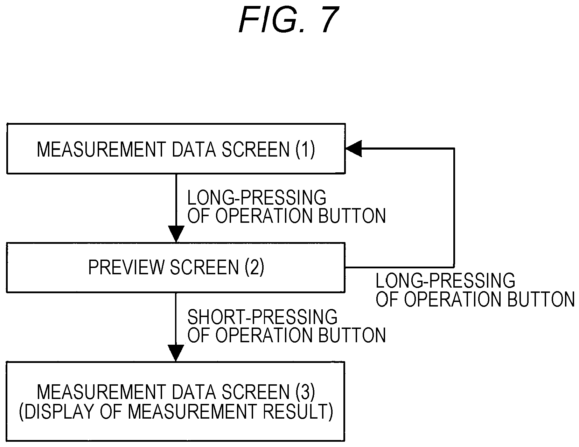

Fig. 7 is a diagram illustrating screen transitions to be displayed on the display 15 in the operation example illustrated in Fig. 6.

Due to the end of the previous measurement, a measurement data screen (1) is displayed on the screen. In this state, when the user long-presses the operation button 14 for a time period exceeding the first set time, the screen transitions to a preview screen (2). Even if the user lifts their finger from the operation button 14 once, the preview mode is locked and the preview screen is continuously displayed.

When the user short-presses the operation button 14 for the operation duration not more than the second set time while the preview screen is displayed, the preview mode ends, the measurement is started, and then a new measurement data screen (3) is displayed after the end of the measurement.

On the other hand, when the user long-presses the operation button 14 for an operation duration exceeding the second set time while the preview screen is displayed, the preview mode ends and the screen returns to the original measurement data screen (1).

In the above-described embodiment, when the operation duration of the operation button 14 exceeds the first set time, the preview mode is activated, and the activation state is locked until the preview mode ends in step S20 and step S21. Thus, even when the user releases the pressing operation of the operation button 14 after the preview mode is activated, the preview mode is maintained. Accordingly, the user no longer needs to continuously press the operation button 14 to maintain the preview mode, which improves the operability and the usability.

Moreover, the operation button 14 is provided at the upper portion of the front surface of the body portion 11 which is the grip region when the user grips the body portion 11 of the measuring apparatus 1 or a nearby portion of the grip region. Accordingly, the user can easily perform a series of operations, from the positioning of the object to be measured 30 by the preview, to the measurement, with a single-handed operation. Note that the position of the operation button 14 is not limited to the upper portion of the front surface of the body portion 11, but is preferably within a range that allows the single-handed operation by the user.

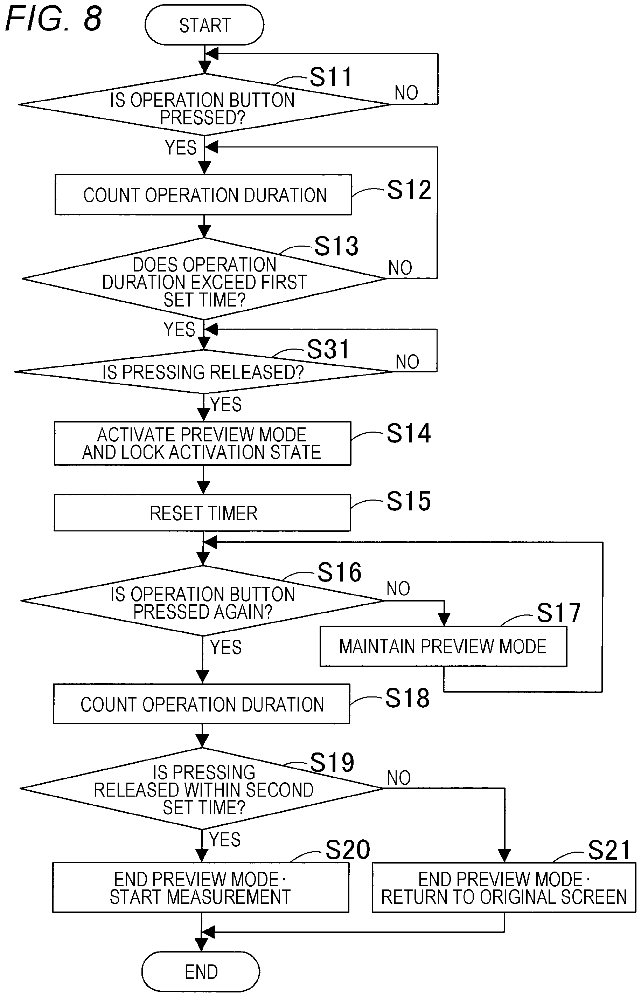

Next, another operation example of the measuring apparatus 1 that selectively executes the start of measurement and the activation of the preview mode based on the way of operation of the operation button 14 will be described with reference to the flowchart of Fig. 8.

The operation example illustrated in the flowchart of Fig. 8 differs from the operation example illustrated in the flowchart of Fig. 6 only in that step S31 is inserted between step S13 and step S14.

That is, in step S13 of Fig. 8, when the operation duration exceeds the first set time (YES in step S13), the processing proceeds to step S31 of Fig. 8. In step S31, the controller 103 determines whether the user has released the pressing of the operation button 14 by lifting their finger from the operation button 14 or the like.

In a case where the pressing of the operation button 14 has not been released (NO in step S31), the controller 103 keeps the processing in step S31 and waits until the pressing is released. When the pressing is released (YES in step S31), the processing proceeds to step S14, and the controller 103 activates and locks the preview mode.

As described above, in the operation example illustrated in Fig. 8, when the user long-presses the operation button 14 for a time period exceeding the first set time and then lifts their finger from the operation button 14, the preview mode is activated.

Note that in the flowchart of Fig. 8, the respective steps other than step S31 are the same as the respective steps of the flowchart illustrated in Fig. 6, and thus, the same step numbers are appended and description thereof is omitted.

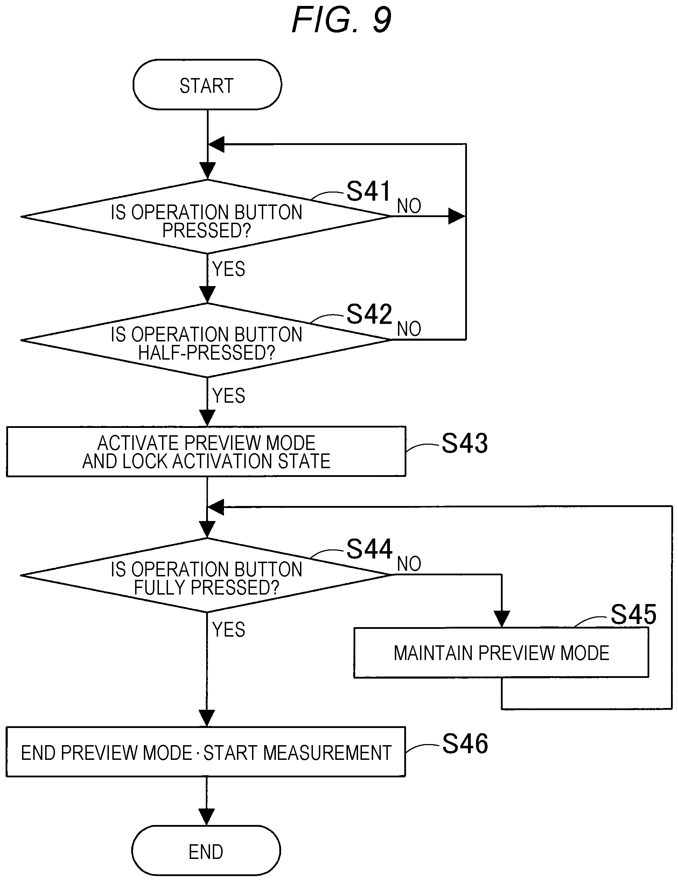

Fig. 9 is a flowchart illustrating still another operation example of the measuring apparatus 1 that selectively executes the start of measurement and the activation of the preview mode based on the way of operation of the operation button 14.

In the operation example, the measuring apparatus 1 is configured to selectively execute the start of measurement and the activation of the preview mode according to the amount of pressing of the operation button 14.

In step S41, the controller 103 determines, based on a detection signal from the sensor 102, whether the operation button 14 has been pressed. In a case of no pressing (NO in step S41), the controller 103 keeps the processing in step S41 and waits until the operation button 14 is pressed.

When the operation button 14 is pressed (YES in step S41), in step S42, the controller 103 determines, based on the detection signal from the sensor 102, whether the operation button 14 has been half-pressed. In a case where the operation button 14 is not half-pressed (NO in step S42), the processing returns to step S41. When the operation button 14 has been half-pressed (YES in step S42), the controller 103 activates the preview mode, operates the electronic viewfinder 106 and locks the activation state in step S43.

Next, in step S44, the controller 103 determines, based on the detection signal from the sensor 102, whether the operation button 14 has been fully pressed. In a case where the operation button 14 is not fully pressed (NO in step S44), in step S45, the controller 103 maintains the preview mode, and returns the processing to step S44 to wait until the operation button 14 is fully pressed. When the operation button 14 has been fully pressed (YES in step S44), in step S46, the controller 103 ends the preview mode and starts measurement by the measurement section 105.

As described above, in this embodiment, when the operation button 14 is half-pressed, the preview mode is activated, and is locked until the operation button 14 is fully pressed. Thus, even when the user releases the pressing operation of the operation button 14 after the preview mode is activated, the preview mode is maintained. Accordingly, the user no longer needs to maintain the half-pressing of the operation button 14 to maintain the preview mode, which improves the operability and the usability.

Although one embodiment of the present invention has been described above, the present invention is not limited to the above-described embodiment. For example, the example has been described in which the operation member is the operation button 14, and the start of measurement and the activation of the preview mode are selectively executed according to the operation duration of the operation button 14. However, the operation member is not limited to the button-type switch, and for example, a lever-type switch or a switch of any other principle may be used therefor. In addition, the operation member may be a touch key. In this case, a time period during which the user continuously touches the touch key may be considered the operation duration.

Furthermore, both the first set time and the second set time are set to 0.5 seconds, but the first set time and the second set time may be different from each other.

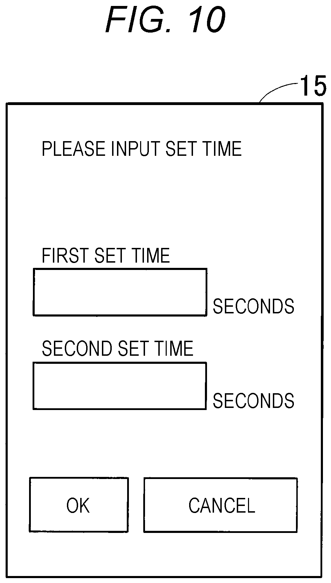

In addition, the first set time and/or the second set time may be freely set by the user. The user can set the time period until the preview mode is activated and the time period for the start of measurement according to their preference. Settings by the user may be performed through the setting screen displayed on the display 15 as illustrated in Fig. 10. On the setting screen of Fig. 10, the message saying "PLEASE INPUT SET TIME", the input fields for the respective set times, the OK button, and the cancel button are displayed.

## Claims

1. An optical characteristic measuring apparatus (1) comprising:
a display (15);
an operation member (14) that is used by a user for both an operation of start of measurement and an operation of activation of preview mode in which an image of a measurement target region is displayed on the display (15); and
control means (103) that selectively executes the start of measurement and the activation of the preview mode based on a way of operation of the operation member (14), and when the preview mode is activated, maintains the preview mode even after the user releases the operation of the operation member (14) until the measurement starts or the preview mode ends.

2. The optical characteristic measuring apparatus (1) according to claim 1, wherein the operation member (14) is provided in or near a grip region to be gripped by the user.

3. The optical characteristic measuring apparatus (1) according to claim 1 or 2, comprising
a timer (102) that counts operation duration of the operation member (14), wherein
the control means (103) selectively executes the start of measurement and the activation of the preview mode according to a length of the operation duration counted by the timer (102).

4. The optical characteristic measuring apparatus (1) according to claim 3, wherein the control means (103) activates the preview mode when the operation duration exceeds a first set time.

5. The optical characteristic measuring apparatus (1) according to claim 3, wherein the control means (103) activates the preview mode when the operation is released after the operation duration exceeds a first set time.

6. The optical characteristic measuring apparatus (1) according to claim 1 or 2, wherein
the operation member (14) is a push button, and
the control means (103) selectively executes the start of measurement and the activation of the preview mode according to an amount of pressing of the push button.

7. The optical characteristic measuring apparatus (1) according to claim 1 or 2, wherein when the operation member (14) is re-operated in a state where the preview mode is maintained after the operation of the operation member (14) is released, the control means (103) ends the preview mode and starts measurement when operation duration during re-operation is not more than a second set time, and ends the preview mode and returns the screen of the display (15) to a screen before a preview when the operation duration during re-operation exceeds the second set time.

8. The optical characteristic measuring apparatus (1) according to claim 4 or 5, wherein the first set time is settable by the user.

9. The optical characteristic measuring apparatus (1) according to claim 7, wherein the second set time is settable by the user.
